# EUROPÄISCHE PATENTSCHRIFT

(11) **EP 1 848 605 B1**
(45) Veröffentlichungstag und Bekanntmachung des Hinweises auf die Patenterteilung: **30.12.2009**
(21) Anmeldenummer: 06722480.8
(22) Anmeldetag: 14.02.2006
(51) Int. Cl.: B60J 7/057, H02H 7/085

(54) **DACHSYSTEM MIT VERSTELLBAREM VERSCHLUSSELEMENT FÜR FAHRZEUGE**
ROOF SYSTEM FOR VEHICLES, COMPRISING AN ADJUSTABLE CLOSING ELEMENT
SYSTEME DE TOIT A ELEMENT DE FERMETURE REGLABLE POUR VEHICULES

(30) Priorität: 15.02.2005 DE 202005002410 U
(43) Veröffentlichungstag der Anmeldung: 31.10.2007
(73) Patentinhaber: Webasto AG, 82131 Stockdorf (DE)
(72) Erfinder: APPEL, Josef, 82131 Gauting (DE); SCHNEIDER, Alois, 86854 Amberg (DE)
(86) Internationale Anmeldenummer: PCT/DE2006/000258
(87) Internationale Veröffentlichungsnummer: WO 2006/086956

(56) Entgegenhaltungen:
- DE-A1- 19 853 137
- DE-U1- 29 608 991
- US-B1- 6 315 355

## Beschreibung

Die Erfindung betrifft ein Dachsystem für Fahrzeuge mit einem Verschlusselement, das mittels eines motorischen Antriebes über mindestens ein steifes Zug-/Druckkabel verstellbar ist, sowie mit einem Einklemmschutzsystem, das im Einklemmfall den Antrieb stillsetzt oder reversiert.

Dachsysteme dieser Art sind in verschiedenen Ausgestaltungen unter, anderem aus DE 198 53 137 A1, bekannt. Dabei können Informationen, die ein mögliches Einklemmen erkennen lassen, aus Betriebsdaten des Antriebs entnommen werden, beispielsweise bei elektrischen Antrieben durch Überwachung des Motorstromes oder des vom Motor abgegebenen Drehmomentes, die beide im Einklemmfall ansteigen. Ferner kann über eine Auswertung der Motorumdrehungen und/oder der Drehzahl eine Beschleunigungs- und/oder Geschwindigkeitsinformation zur Hinderniserkennung genutzt werden (DE 34 33 204 Al). Bei Über- oder Unterschreiten bestimmter Schwellwerte der jeweils erfassten Parameter wird der Antrieb stillgesetzt oder wird die Bewegungsrichtung umgekehrt.

Infolge der mechanischen Trägheit des Antriebs und der damit verbundenen Vorrichtungsteile nimmt aber auch nach dem Erkennen einer Einklemmsituation die Klemmkraft noch zu, bis die bewegten Teile zum Stillstand gekommen sind beziehungsweise die Reversierbewegung einsetzt. Insbesondere bei einem Klemmen von harten Körperteilen oder Überprüfung mit einem harten Testkörper in einem steifen Dachsystem resultieren daraus hohe Klemmkräfte, die zu Verletzungen und/oder Beschädigungen führen können. Um den Einfluss eines solchen Nachlaufs gering zu halten, hat man bei bekannten Anordnungen die Verfahrgeschwindigkeit beim Schließen in den einklemmgefährdeten Bereichen verringert. Dies bewirkt aber eine erhöhte Schließzeit und erfordert zudem eine aufwändige Drehzahlsteuerung.

Aufgabe der Erfindung ist es, ein Dachsystem mit verstellbarem Verschlusselement für Fahrzeuge zu schaffen, bei dem auf besonders kostengünstige und gleichwohl effektive Weise dem Auftreten übermäßig hoher Klemmkräfte entgegengewirkt und für relativ kurze Schließzeiten gesorgt wird.

Diese Aufgabe wird bei einem Dachsystem für Fahrzeuge mit einem Verschlusselement, das mittels eines motorischen Antriebes über mindestens ein steifes Zug-/Druckkabel verstellbar ist, sowie mit einem Einklemmschutzsystem, das im Einklemmfall den Antrieb stillsetzt oder reversiert, erfingdungsgemäß dadurch gelöst, dass in den Kraftübertragungsweg zwischen dem verstellbaren Verschlusselement und dem Antrieb mindestens ein elastisch verformbares Element eingefügt ist, das am Übergang zwischen dem Zug-/Druckkabel und einer mit dem verstellbaren Verschlusselement in Antriebsverbindung stehenden Verstellmechanik angebracht ist.

Auf diese Weise wird die Nachgiebigkeit "d" des Gesamtsystems verringert, und die nachlaufbedingte zusätzliche Kraft dF_{Nachlauf} = ds_{Nachlauf} * d wird minimiert. Damit lassen sich die Vorschriften für die Klemmkräfte (FMVSS 118) ohne weiteres einhalten. Die Reduzierung der Verfahrgeschwindigkeit kann in vielen Fällen entfallen. Infolgedessen können Kosten eingespart werden; zugleich kann die Schließzeit verringert werden.

Bevorzugte Ausgestaltungen der Erfindung ergeben sich aus den Unteransprüchen.

So kann vorteilhaft zum Reduzieren der Nachgiebigkeit des Gesamtsystems am . Übergang zwischen dem Zug-/Druckkabel und einer mit dem verstellbaren Verschlusselement in Antriebsverbindung stehenden Verstellmechanik mindestens eine Feder, insbesondere eine Blattfeder, angebracht sein. Eine solche Feder ist vorzugsweise am Übergang zwischen dem Zug-/Druckkabel und einem einen Teil der Verstellmechanik bildenden Mechanikschlitten angeordnet.

Nachstehend sind Ausführungsbeispiele der Erfindung anhand der Zeichnungen näher erläutert. Es zeigt:
- Fig. 1: ein Blockschaltbild eines Fahrzeugdachsystems mit Einklemmschutz, und
- Fig. 2: einen schematischen Teilschnitt des Dachsystems nach Fig. 1.

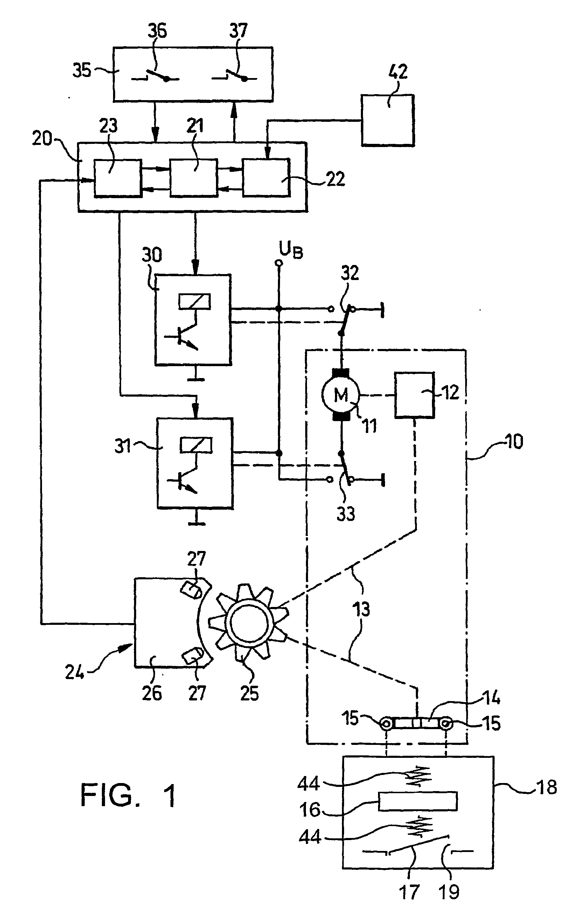

Das Dachsystem gemäß Fig. 1 weist einen Deckelantrieb 10 mit einem aus dem Bordnetz des Kraftfahrzeuges gespeisten, reversierbaren Elektromotor 11 und einem dem Motor 11 nachgeschalteten Untersetzungsgetriebe 12 auf. Auf einer Abtriebswelle 13 des Untersetzungsgetriebes 12 sitzt ein Antriebsritzel 14. Mit dem Antriebsritzel 14 stehen zwei steife Zug-/Druckkabel (Antriebskabel) 15 in Kämmeingriff, die über eine schematisch bei 16 angedeutete Verstellmechanik mit dem verstellbaren Deckel 17 eines Schiebe/Hebedaches 18 gekoppelt sind. Mittels des Deckels 17 kann eine Dachöffnung 19 wahlweise verschlossen oder mindestens teilweise freigelegt werden.

Zu einer insgesamt mit 20 bezeichneten Steuereinheit gehören insbesondere ein Mikroprozessor 21, ein Einklemmschutzsystem 22 und eine Auswerteeinheit 23. Der Auswerteeinheit 23 gehen Sensorsignale von einem Sensor 24 zum Erfassen von Drehbewegungen der Abtriebswelle 13 zu. Die Auswerteeinheit 23 kann insbesondere einen Positionszähler aufweisen, der die Sensorsignale bei jeder Verstellbewegung des Deckels erfasst. Der Sensor 24 weist beispielsweise ein auf der Abtriebswelle 13 sitzendes Magnetrad 25 und eine Hallsensoreinheit 26 mit zwei Hallgeneratoren 27 auf. Der Motor 11 ist als Gleichstrommotor ausgelegt, und die Polung der Motorspannung lässt sich mittels zweier Relais 30 und 31 umkehren, um so die Drehrichtung des Motors zu reversieren. Für diesen Zweck weisen die Relais 30, 31 jeweils einen im Speisestromkreis des Motors 11 liegenden Relaiskontakt 32 beziehungsweise 33 auf. Die Relais 30, 31 werden von der Steuereinheit 20 angesteuert, die ihrerseits unter dem Einfluss einer Bedieneinheit 35 steht. Die Bedieneinheit 35 weist schematisch dargestellte Bedienelemente 36 und 37 auf, bei deren Betätigung der Motor 11 zum Lauf in der einen beziehungsweise der anderen Drehrichtung (vorwärts/rückwärts) veranlasst wird.

Befindet sich beispielsweise der Deckel 17 in der Schließstellung und wird das Bedienelement 36 (vorwärts) betätigt, lässt die Steuereinheit 20 das Relais 30 anziehen, während das Relais 31 abgefallen bleibt. Der Relaiskontakt 32 schaltet um. Strom fließt von einem Pol U_{B} des Bordnetzes, den Kontakt 32 durch den Motor 11 in der einen Richtung und über den Relaiskontakt 33 nach Masse. Über die Antriebskabel 15 und die Verstellmechanik 16 wird der Deckel 17 zu einer Austellbewegung in die in Fig. 1 skizzierte ausgestellte Lage veranlasst.

Wird ausgehend von der Deckelstellung gemäß Fig. 1 das Bedienelement 37 (rückwärts) betätigt, wird bei abgefallenem Relais 30 das Relais 31 zum Anziehen gebracht. Strom fließt von dem Pol U_{B} des Bordnetzes, den Relaiskontakt 33 durch den Motor 11 in der anderen Richtung und über den Relaiskontakt 32 nach Masse. Der Deckel 17 wird abgesenkt. Weil dabei die Gefahr eines Einklemmens von Fingern oder dergleichen zwischen der Hinterkante des Deckels und der Hinterkante der Dachöffnung 19 besteht, aktiviert der Mikroprozessor 21 das Einklemmschutzsystem 22. Das Einklemmschutzsystem 22 ist mit einem Einklemmsensor 42 verbunden, der signalisiert, wenn es zu einem Einklemmen kommt oder ein Einklemmen droht. Der Einklemmsensor 42 kann in beliebiger bekannter Weise aufgebaut und angeordnet sein. Beispielsweise kann es sich dabei um einen Kraftsensor zum Ermitteln einer einen vorgegebenen Wert übersteigenden Kraft auf die Deckelränder, einen Stromsensor zum Erfassen eines für einen Einklemmfall typischen Anstieges des Motorstromes oder einen Verzögerungssensor zum Ermitteln einer ein Einklemmen anzeigenden Abbremsung der Deckelverstellbewegung oder dergleichen handeln.

Um einen unerwünschten Anstieg der Klemmkraft zu vermeiden, der auch nach dem Erkennen einer Einklemmsituation durch mechanische Trägheit bewegter Vorrichtungsteile verursacht werden könnte, ist bei dem Dachsystem gemäß Fig. 1 ein in der Zeichnung als Feder angedeutetes nachgiebiges Element 44 in den Krafiübertragungsweg zwischen dem Deckelantrieb 10 und dem verstellbaren Verschlusselement 17 (Deckel) eingefügt. Vorzugsweise befindet sich dieses nachgiebige Element 44 am Übergang zwischen dem Zug-/Druck-Kabel 15 und der Verstellmechanik 16. Das nachgiebige Element 44 kann aber, wie gleichfalls in Fig.. 1 angedeutet ist, beispielsweise auch zwischen der Verstellmechanik 16 und dem verstellbaren Verschlusselement (Deckel 17) angeordnet sein.

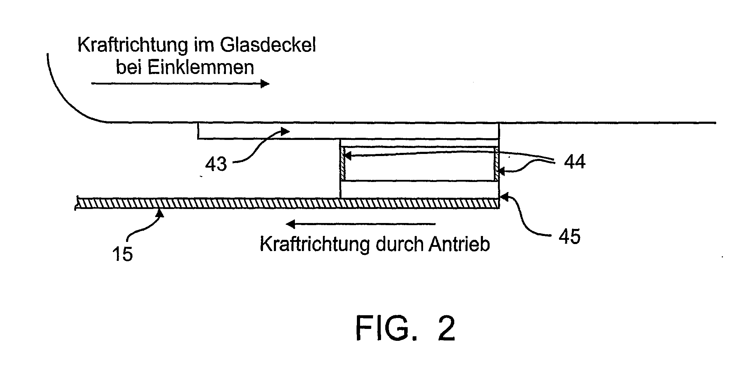

Fig. 2 zeigt ein bevorzugtes Ausführungsbeispiel. Dabei sind zur Verringerung der Nachgiebigkeit des Dachsystems zwei Blattfedern 44 im Bereich der Anbindung 45 des Zug-/Druck-Kabels 15 an einen Mechanikschlitten. 43 angebracht. Disser Mechanikschlitten 43 bildet einen Teil der Verstellmechanik 16, und er ist mit dem Verschlusselement 17, beispielsweise einem Glasdeckel, gekoppelt.

### Bezugszeichenliste

- 10: Deckelantrieb
- 11: Elektromotor
- 12: Untersetzungsgetriebe
- 13: Abtriebswelle
- 14: Antriebsritzel
- 15: Zug-/Druck-Kabel
- 16: Verstellmechanik
- 17: Verschlusselement (Deckel)
- 18: Schiebe/Hebedach
- 19: Dachöffnung
- 20: Steuereinheit
- 21: Microprozessor
- 22: Einklemmschutzsystem
- 23: Auswerteeinheit
- 24: Sensor
- 25: Magnetrad
- 26: Hallsensoreinheit
- 27: Hallgenerator
- 30, 31: Relais
- 32, 33: Relaiskontakt
- 35: Bedieneinheit
- 36, 37: Bedienelement
- 42: Einklemmsensor
- 43: Mechanikschlitten
- 44: nachgiebiges Element (Blattfeder)
- 45: Anbindung

## Patentansprüche

1. Dachsystem für Fahrzeuge mit einem Verschlusselement (17), das mittels eines motorischen Antriebes (10) über mindestens ein steifes Zug-/Druckkabe (15) verstellbar ist, sowie mit einem Einklemmschutzsystem (22), das im Einklemmfall den Antrieb stillsetzt oder reversiert, **dadurch gekennzeichnet, dass** in den Kraftübertragungsweg zwischen dem verstellbaren Verschlusselement (17) und dem Antrieb (10) mindestens ein elastisch verformbares Element (44) eingefügt ist, das am Übergang zwischen dem Zug-/Druckkabel (15) und einer mit dem verstellbaren Verschlusselement (17) in Antriebsverbindung stehenden Verstellmechanik (16) angebracht ist.

2. Dachsystem nach Anspruch 1, **dadurch gekennzeichnet, dass** das elastisch verformbare Element einer Feder (44) ist

3. Dachsystem nach Anspruch 2, **dadurch gekennzeichnet, dass** die Feder (44) als Blattfeder ausgebildet ist.

4. Dachsystem nach Anspruch 2 oder 3, **dadurch gekennzeichnet, dass** die Feder (44) am Übergang zwischen dem Zug-/Druckkabel (15) und einem einen Teil der Verstellmechanik (16) bildenden Mechanikschlitten (43) angeordnet ist

## Claims

1. Roof system for vehicles, comprising a closure element (17) which can be adjusted by means of a motorized drive (10) via at least one rigid push/pull cable (15), and comprising an anti-tracking system (22) which, in the case of tracking, deactivates or reverses the drive, **characterized in that** at least one elastically deformable element (44) is inserted between the adjustable closure element (17) and the drive (10), which elastically deformable element (44) is attached to the junction between the push/pull cable (15) and an adjustment mechanism (16) which has a drive connection to the adjustable closure element (17).

2. Roof system according to Claim 1, **characterized in that** the elastically deformable element is a spring (44).

3. Roof system according to Claim 2, **characterized in that** the spring (44) is a leaf spring.

4. Roof system according to Claim 2 or 3, **characterized in that** the spring (44) is arranged at the junction between the push/pull cable (15) and a mechanism carriage (43) which forms part of the adjustment mechanism (16).

## Revendications

1. Système de toit pour véhicules comprenant un élément de fermeture (17) qui peut être déplacé au moyen d'un entraînement à moteur (10) par le biais d'au moins un câble de traction/compression rigide (15), ainsi qu'un système de protection contre le blocage (22) qui, en cas de blocage, immobilise ou inverse l'entraînement, **caractérisé en ce que** dans la voie de transfert de force entre l'élément de fermeture déplaçable (17) et l'entraînement (10), on insère au moins un élément déformable élastiquement (44) qui est monté au niveau de la transition entre le câble de traction/compression (15) et un mécanisme de réglage (16) en liaison d'entraînement avec l'élément de fermeture déplaçable (17).

2. Système de toit selon la revendication 1, **caractérisé en ce que** l'élément déformable élastiquement est un ressort (44).

3. Système de toit selon la revendication 2, **caractérisé en ce que** le ressort (44) est réalisé sous forme de ressort à lame.

4. Système de toit selon la revendication 2 ou 3, **caractérisé en ce que** le ressort (44) est disposé à la transition entre le câble de traction/compression (15) et un chariot du mécanisme (43) formant une partie du mécanisme de réglage (16).
